Europäisches Patentamt

**European Patent Office**

Office européen des brevets

(19)

(11) Veröffentlichungsnummer: **0 083 681**
**B1**

(12)

# EUROPÄISCHE PATENTSCHRIFT

(45) Veröffentlichungstag der Patentschrift:
31.07.85

(51) Int. Cl.⁴: **F 16 D 65/02**

(21) Anmeldenummer: **82101994.0**

(22) Anmeldetag: **12.03.82**

(54) **Trägerplatte für Bremsbeläge von Scheibenbremsen.**

(30) Priorität: **12.01.82 DE 8200473 U**

(43) Veröffentlichungstag der Anmeldung:
**20.07.83 Patentblatt 83/29**

(45) Bekanntmachung des Hinweises auf die Patenterteilung:
**31.07.85 Patentblatt 85/31**

(84) Benannte Vertragsstaaten:
**AT BE CH DE FR GB IT LI NL SE**

(56) Entgegenhaltungen:
**DE - A - 1 475 497**
**DE - A - 1 575 898**
**DE - A - 1 600 155**
**DE - A - 2 153 610**
**DE - A - 2 314 823**
**DE - A - 2 713 377**
**DE - A - 2 728 131**
**DE - A - 2 902 054**
**FR - A - 2 309 759**
**FR - A - 2 441 100**
**GB - A - 2 071 795**
**US - A - 3 349 871**

(73) Patentinhaber: **Jurid Werke GmbH, Glinder Weg 1,
D-2057 Reinbek (DE)**

(72) Erfinder: **Ziolkowski, Jürgen, Pillauer Weg 7,
D-2057 Reinbek (DE)**

(74) Vertreter: **Richter, Joachim, Dipl.-Ing., Patentanwälte
Richter u.Werdermann Neuer Wall 10,
D-2000 Hamburg 36 (DE)**

BUNDESDRUCKEREI BERLIN

## Beschreibung

Die Erfindung betrifft eine Trägerplatte für Bremsbeläge von Scheibenbremsen, bei denen die Bremsbeläge mittels Trägerplatten an den das Flanschgehäuse mit einem Bremszylinder und das Deckelgehäuse mit einem Bremszylinder miteinander verbindenden Haltestiften im Vorschubbereich der Bremszylinderkolben gehalten sind, die rechteckförmig ausgebildet ist, aus einem eine geringe Stärke aufweisenden Blech besteht und im Auflage- und Befestigungsbereich für den Bremsbelag teilweise durch Einziehen axial verformt ist.

Die Anordnung und Befestigung von Bremsbelägen für Scheibenbremsen erfolgt in an sich bekannter Weise mit Trägerplatten im Bereich der Vorschubbahn der Bremszylinderkolben, wobei die Bremsbeläge als Blöcke aus Reibwerkstoffen auf diesen Trägerplatten befestigt sind, die vermittels Haltestiften gehalten sind, die das Flanschgehäuse und das Deckelgehäuse der Scheibenbremse verbinden. Sowohl das Flanschgehäuse als auch das Deckelgehäuse ist mit je einem Bremszylinder versehen.

Zur Herstellung dieser Trägerplatten für die Bremsbeläge werden relativ starke Bleche aus korrodierendem Material mit der Folge verwendet, daß insbesondere durch Feuchtigkeits- und Streusalzeinwirkung im Winter ein Festrosten der Trägerplatte oftmals nicht vermeidbar ist, so daß das Auswechseln der Bremsbeläge mit derart festsitzenden Trägerplatten arbeitsaufwendig und mühevoll ist.

Hinzu kommt noch, daß die bekannten Trägerplatten mit einer geräuschdämmenden Lackschicht zur Geräuschminderung versehen sind. Dieses Aufbringen der geräuschdämmenden Lackschicht ist arbeitsaufwendig und mit zusätzlichen Herstellungskosten für die Trägerplatten mit den Bremsbelägen verbunden.

Nach der DE-A-15 75 898 ist eine Trägerplatte für Bremsbeläge von Scheibenbremsen bekannt, die rechteckförmig ausgebildet ist, aus verhältnismäßig dünnem Material besteht und im Auflage- und Befestigungsbereich für den Bremsbelag mit axial verformten Einziehungen versehen ist, die jedoch an den beiden sich gegenüberliegenden radialen Randbereichen der Trägerplatte und z. B. bogenförmig ausgebildet sind. Da diese Trägerplatte aus dünnem Material besteht, reicht deren Dicke allein nicht aus, um sicherzustellen, daß sich die Trägerplatte nicht im Zwischenraum zwischen dem Drehkörper und dem Kissenstützteil einklemmen kann. Daher sind die radialen Randbereiche der Trägerplatte oder Teile dieser Randbereiche derart verdickt, daß ihre Abmessung größer ist als der erwähnte Zwischenraum. Bei einer derartigen Trägerplattenausgestaltung wird die Trägerplattenoberfläche nicht wesentlich vergrößert, um eine gute Wärmeableitung sicherzustellen. Die Trägerplatte weist keine hohe Eigenstabilität auf.

Die Erfindung löst die Aufgabe, eine Trägerplatte für Bremsbeläge von Scheibenbremsen zu schaffen, die in ihrer Herstellung wirtschaftlich ist, die eine gute Wärmeableitung ermöglicht, eine große Laufruhe gewährleistet und darüber hinaus das Aufkommen von Geräuschen verhindert.

Zur Lösung dieser Aufgabe wird eine Trägerplatte gemäß der eingangs beschriebenen Art vorgeschlagen, die erfindungsgemäß in der Weise ausgebildet ist, daß die Trägerplatte mit einer einzigen sickenförmigen Einziehung versehen ist, die eine ebene Fläche definiert, die in der Vorschubbahn des Bremszylinderkolbens liegend und von diesem beaufschlagbar ist, und die mit einer in Richtung zum Bremszylinderkolben gerichteten Auswölbung versehen ist.

Eine besonders vorteilhafte Ausführungsform der Erfindung sieht eine Trägerplatte mit einer sickenförmigen Einziehung in Form eines etwa kreisförmigen Querschnittes vor, wobei der umlaufende Wandabschnitt des Übergangsbereiches von der bremsbelagauflageseitigen Trägerplattenfläche zur Einziehungsfläche leicht geneigt hin verlaufend ausgebildet ist.

Eine derart ausgebildete Trägerplatte weist trotz der geringen Materialstärke aufgrund der ausgebildeten sickenförmigen Einziehung eine hohe Eigenstabilität auf und wird somit allen Anforderungen gerecht, die an eine Trägerplatte für Bremsbeläge gestellt werden. Darüber hinaus ermöglicht die in der Trägerplatte ausgebildete Einziehung eine gute Befestigung des Bremsbelages auf der Trägerplatte, da durch die Einziehung der Bremsbelag einen zusätzlichen Halt bekommt. Die Befestigung des Bremsbelages auf der gesamten Trägerplattenfläche erfolgt in an sich bekannter Weise, beispielsweise unter Verwendung einer geeigneten Klebverbindung.

Neben der hohen Eigensteifigkeit ist die Trägerplatte aus korrosionsbeständigen Werkstoffen gefertigt. Durch die sickenartige Formgebung der Trägerplatte wird nicht nur die Eigensteifigkeit, sondern auch die Biegefestigkeit der Trägerplatte erhöht. Dadurch, daß die Trägerplatte aus einem eine geringe Stärke aufweisenden Blech hergestellt wird, können die Herstellungskosten niedrig gehalten werden; die Wirtschaftlichkeit bei der Herstellung derartiger Trägerplatten wird somit erhöht.

Aufgrund der sickenartigen Formgebung wird die Trägerplattenoberfläche vergrößert, wodurch sich eine verbesserte Wärmeableitung ergibt. Es kann kein Wärmestau mehr auftreten, da die abgegebene Wärme durch die Umluft besser abgeleitet wird.

Außerdem hat es sich überraschend gezeigt, daß aufgrund dieser Trägerplattenprofilierung das Entstehen von Geräuschen vermieden und die Laufruhe erhöht wird. Dadurch können geräuschdämmende Lackschichten eingespart werden.

Vorteilhafte Weiterbildungen der Erfindung sind in den Unteransprüchen beschrieben.

Im folgenden wird der Gegenstand der Erfindung in den Zeichnungen erläutert. Es zeigt

Fig. 1 in einer Explosionsdarstellung eine Scheibenbremse mit zwei Bremsbelägen,

Fig. 2 eine Trägerplatte in einer Ansicht auf die den Bremsbelag tragende Seite,

Fig. 3 die Trägerplatte in einer Ansicht auf die vom Bremszylinderkolben beaufschlagte Seite,

Fig. 4 einen senkrechten Schnitt gemäß Linie IV-IV in Fig. 2,

Fig. 5 einen senkrechten Schnitt gemäß Linie V-V in Fig. 2,

Fig. 6 eine Seitenansicht einer Trägerplatte mit aufgeklebtem Bremsbelag,

Fig. 7 eine Ansicht von oben auf eine Trägerplatte für Bremsbeläge,

Fig. 8 eine Seitenansicht der Trägerplatte gemäß Fig. 7,

Fig. 9 einen senkrechten Schnitt gemäß Linie IX-IX in Fig. 7,

Fig. 10 eine Ansicht von oben auf eine weitere Ausführungsform einer Trägerplatte für Inselbremsbeläge,

Fig. 11 einen senkrechten Schnitt gemäß Linie XI-XI in Fig. 10,

Fig. 12 eine Ansicht von oben auf die Trägerplatte gemäß Fig. 10,

Fig. 13 eine Ansicht von oben auf eine weitere Ausführungsform einer Trägerplatte für Inselbremsbeläge,

Fig. 14 einen Schnitt gemäß Linie XIV-XIV in Fig. 13,

Fig. 15 eine Ansicht von oben auf die Trägerplatte gemäß Fig. 13,

Fig. 16 einen Schnitt gemäß Linie XVI-XVI in Fig. 13,

Fig. 17 eine Seitenansicht eines Endabschnittes der Trägerplatte gemäß Fig. 13 mit einer angeformten Doppel-Lasche vor dem Abbiegen der einen Laschenhälfte,

Fig. 18 eine Ansicht von oben auf den Endabschnitt der Trägerplatte gemäß Fig. 17 mit abgebogener Laschenhälfte,

Fig. 19 eine Ansicht von oben auf die Trägerplatte für einen Inselbremsbelag in einer weiteren Ausführungsform,

Fig. 20 einen senkrechten Schnitt gemäß Linie XX-XX in Fig. 19,

Fig. 21 einen senkrechten Schnitt gemäß Linie XXI-XXI in Fig. 19 und

Fig. 22 einen senkrechten Teilschnitt gemäß Linie XXII-XXII in Fig. 19.

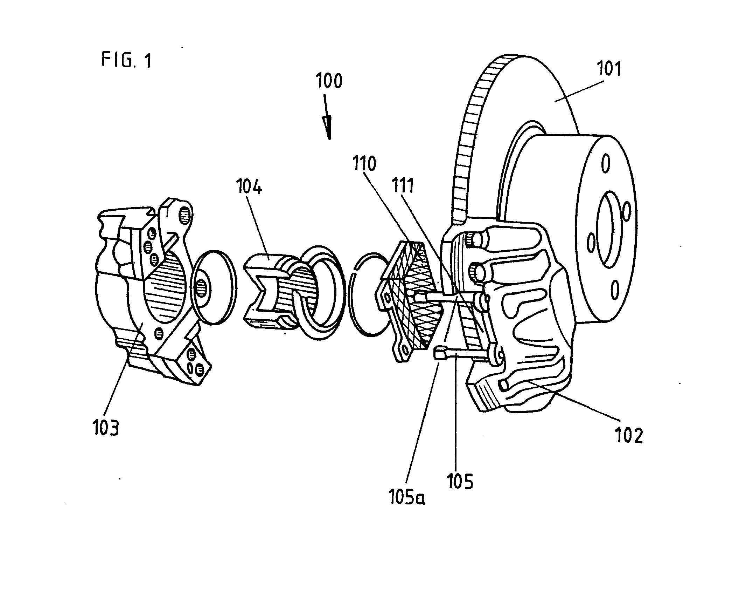

Die in Fig. 1 dargestellte und mit 100 bezeichnete Scheibenbremse besteht aus der Bremsscheibe 101, dem Deckelgehäuse 102 mit einem Bremszylinder und dem Bremskolben, dem Flanschgehäuse 103 mit einem Bremszylinder und dem Bremskolben und den Bremsbelägen 110, 111, die vermittels Trägerplatten an Haltestiften 105, 105a gehalten sind, die das Deckelgehäuse 102 und das Flanschgehäuse 103 miteinander verbinden. Der in Fig. 1 sichtbar eingezeichnete Bremskolben des Flanschgehäuses 103 ist mit 104 bezeichnet. Die Bremsbeläge 110, 111 bestehen aus Blöcken aus Reibwerkstoffen und sind insbesondere mittels Klebverbindungen auf ihren Trägerplatten gehalten, wobei jedoch auch andere Verbindungsmittel zur Anwendung gelangen können.

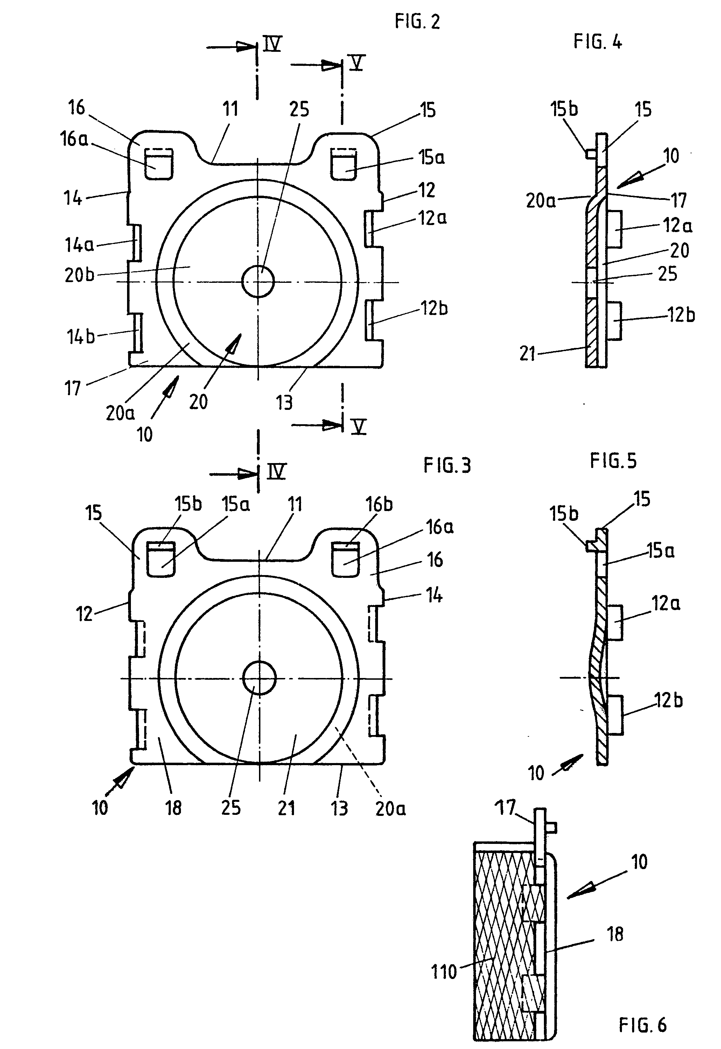

Die in Fig. 2 und 3 dargestellte und mit 10 bezeichnete Trägerplatte besteht aus einem etwa rechteckförmigen und eine geringe Stärke aufweisenden Blech mit den Seitenkanten 11, 12, 13, 14. Im Bereich der oberen Seitenkante 11 sind an das die Trägerplatte 10 bildende Blech Laschen 15, 16 angeformt, die mit Durchbrechungen 15a, 16a versehen sind, durch die die Haltestifte 105, 105a hindurchführbar sind.

Die Trägerplatte 10 ist im Auflage- und Befestigungsbereich für den Bremsbelag 110 (Fig. 6) mit einer sickenförmigen Einziehung 20 versehen, die derart in der Trägerplatte 10 ausgebildet ist, daß ihre Auswölbung 21 in der Vorschubbahn des Bremszylinderkolbens zu liegen kommt und von diesem beaufschlagbar ist.

Bei der in Fig. 2 und 3 gezeigten Ausführungsform weist die sickenförmige Einziehung 20 einen etwa kreisförmigen Querschnitt auf, jedoch auch andere Formen der Einziehung 20 können zur Anwendung gelangen. Der umlaufende Wandabschnitt 20a des Übergangsbereichs von der Trägerplattenfläche 17 zur Einziehungsfläche 20b ist leicht geneigt verlaufend ausgebildet (Fig. 4). Mittig kann die Einziehungsfläche 20b mit einer Durchbrechung 25 versehen sein. Diese Durchbrechung hat die Funktion eines Sichtfensters zur Kontrolle der für die Befestigung des Bremsbelages 110 auf der Trägerplatte 10 verwendeten Klebefolie.

Die Laschen 15, 16 der Trägerplatte 10 weisen im oberen, ihre Durchbrechungen 15a, 16a begrenzenden Kantenbereich abgewinkelte Abschnitte 15b, 16b auf, die aus der Trägerplattenfläche 18 herausgestellt sind. Durch diese abgewinkelten Abschnitte 15b, 16b wird erreicht, daß die in die Scheibenbremse eingebauten Bremsbeläge eine geradlinige Stellung aufweisen (Fig. 3 und 5).

Die Trägerplatte 10, die aus korrosionsbeständigen Werkstoffen, beispielsweise aus nichtrostendem Stahl, besteht, weist im Bereich ihrer gegenüberliegenden Seitenkanten 12, 14 aus der Fläche 17 der Trägerplatte 10 im rechten Winkel herausgestellte Abschnitte 12a, 12b und 14a, 14b auf. Vermittels dieser Abschnitte 12a, 12b, 14a, 14b ist der auf die Trägerplattenfläche 17 aufgeklebte Bremsbelag sicher gehalten, wobei dieser die durch die Abschnitte gebildete seitliche Kantung auftretenden, seitlichen Scherkräfte aufnimmt und die Verbindungsfestigkeit zwischen dem Bremsbelag und der Trägerplatte darüber hinaus auch noch erhöht wird (Fig. 6).

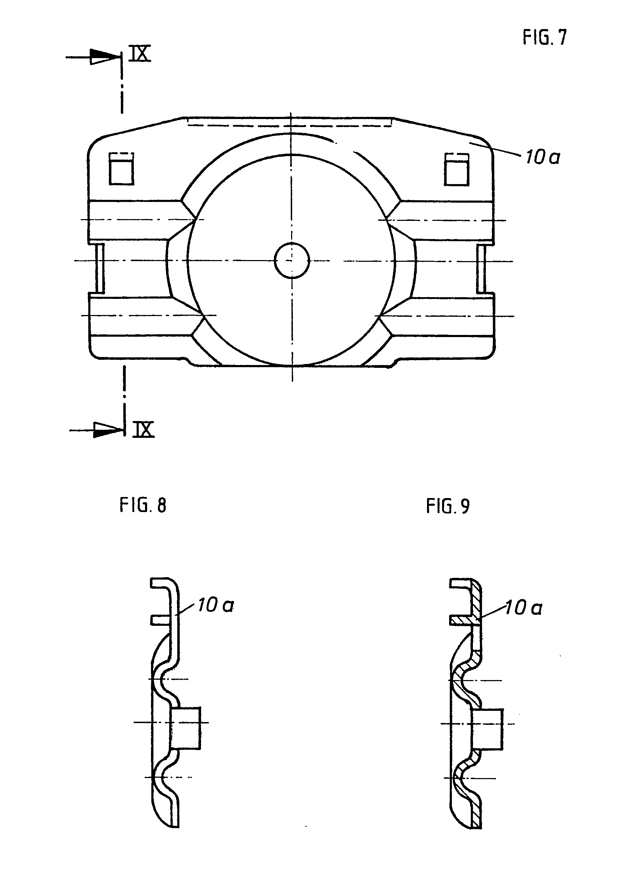

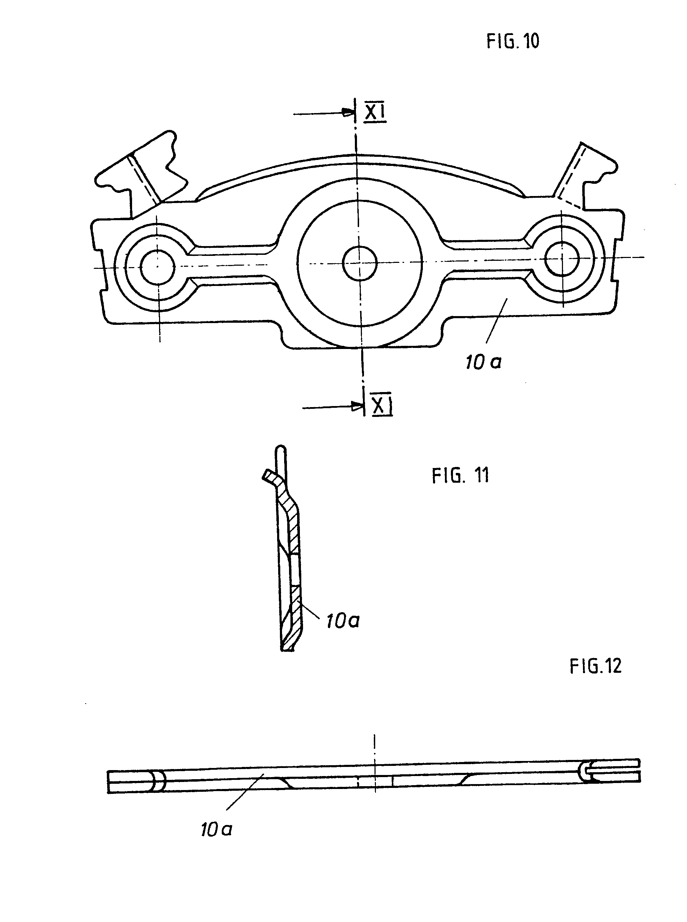

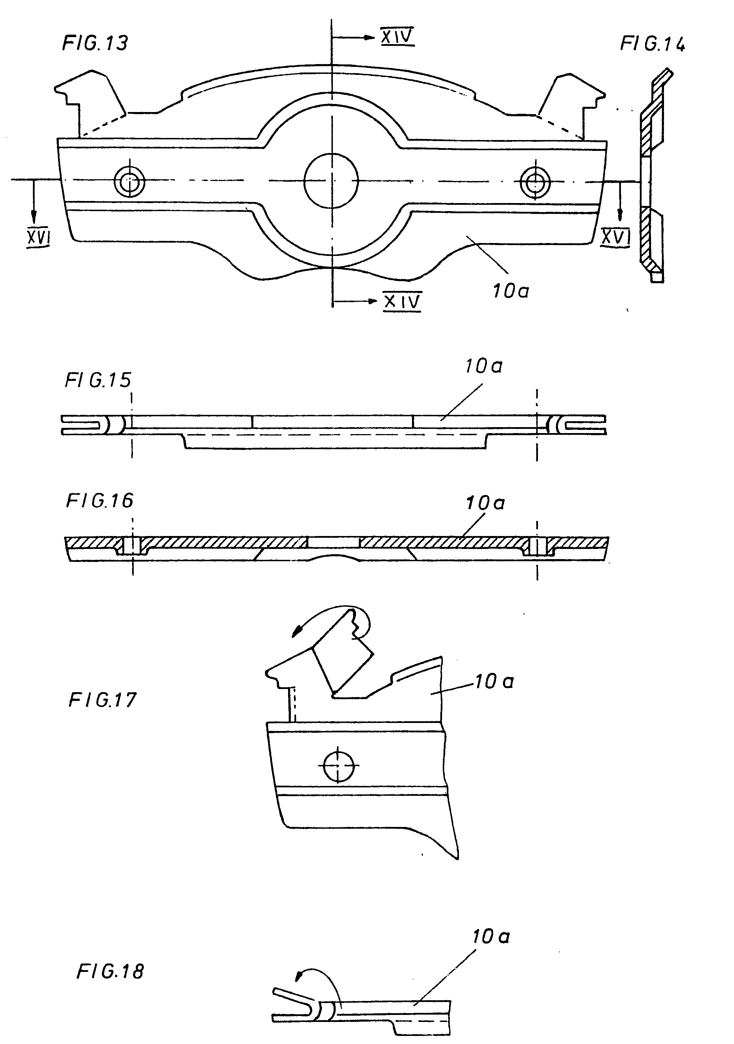

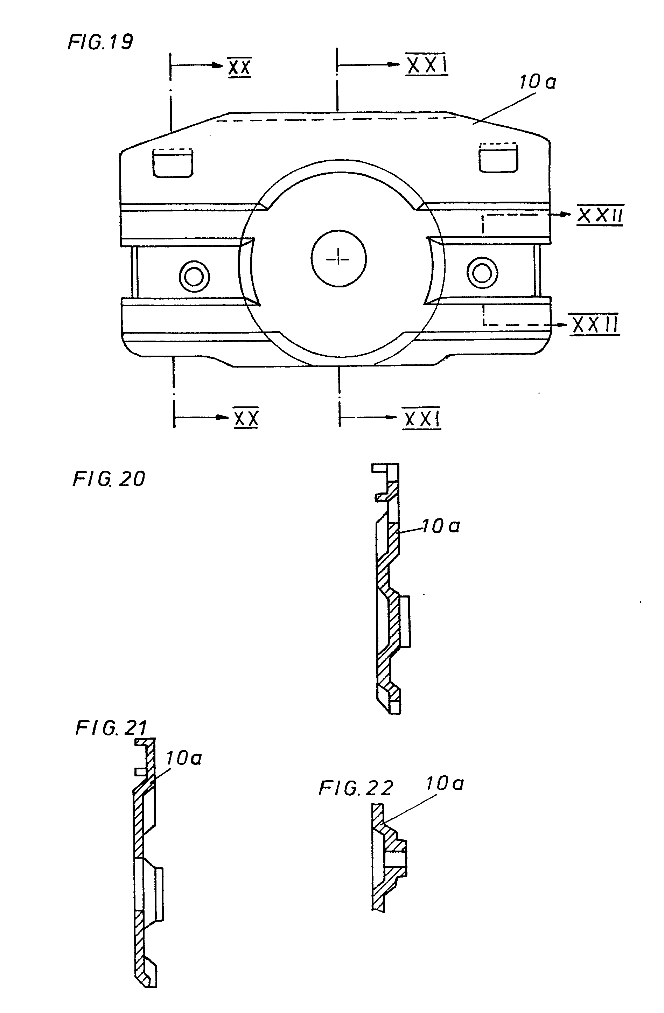

Fig. 7 bis 22 zeigen verschiedene Ausführungsformen von Trägerplatten 10a für Inselbremsbeläge, wobei diese Trägerplatten 10a entsprechend der Trägerplatte 10 in gleicher Weise mit einer sickenförmigen Einziehung im Auflage- und Befestigungsbereich der Inselbremsbeläge versehen ist.

## Patentansprüche

1. Trägerplatte (10) für Bremsbeläge von Scheibenbremsen, bei denen die Bremsbeläge mittels Trägerplatten an den das Flanschgehäuse mit einem Bremszylinder und das Deckelgehäuse mit einem Bremszylinder miteinander verbindenden Haltestiften im Vorschubbereich der Bremszylinderkolben gehalten sind, die rechteckförmig ausgebildet ist, aus einem eine geringe Stärke aufweisenden Blech besteht und im Auflage- und Befestigungsbereich für den Bremsbelag teilweise durch Einziehen axial verformt ist, dadurch gekennzeichnet, daß die Trägerplatte (10, 10a) mit einer einzigen sickenförmigen Einziehung (20) versehen ist, die eine ebene Fläche definiert, die in der Vorschubbahn des Bremszylinderkolbens liegend und von diesem beaufschlagbar ist, und die mit einer in Richtung zum Bremszylinderkolben gerichteten Auswölbung (21) versehen ist.

2. Trägerplatte nach Anspruch 1, dadurch gekennzeichnet, daß die sickenförmige Einziehung (20) einen etwa kreisförmigen Querschnitt aufweist.

3. Trägerplatte nach Anspruch 2, dadurch gekennzeichnet, daß der umlaufende Wandabschnitt (20a) des Übergangsbereichs von der bremsbelagauflageseitigen Trägerplattenfläche (17) zur Einziehungsfläche leicht geneigt verlaufend ausgebildet ist.

4. Trägerplatte nach Anspruch 1 bis 3, dadurch gekennzeichnet, daß jede der beiden an der Trägerplatte (10) ausgebildeten Haltelaschen (15, 16) mit den Haltestiftdurchbrechungen (15a, 16a) einen aus der bremszylinderkolbenbeaufschlagten Trägerplattenfläche (18) herausragenden und im oberen Kantenbereich der rechteckförmigen Haltestiftdurchbrechung (15a, 16a) abgewinkelten Abschnitt (15b, 16b) aufweist.

5. Trägerplatte nach Anspruch 1 bis 4, dadurch gekennzeichnet, daß im Bereich der seitlichen Kanten (12, 14) der Trägerplatte (10, 10a) aus der bremsbelagauflageseitigen Trägerplattenfläche (17) senkrecht stehende Abschnitte (12a, 12b; 14a, 14b) ausgebildet sind.

6. Trägerplatte nach Anspruch 1 bis 5, dadurch gekennzeichnet, daß die Trägerplatte (10, 10a) aus einem korrosionsbeständigen Werkstoff besteht.

## Claims

1. Carrier plate (10) for brake linings of disk brakes, in which the brake linings are held by means of carrier plates on the locking pins interconnecting the flange casing with a dashpot and the cover casing with a dashpot in the feed area of the dashpot piston and which is constructed in a rectangular manner from sheet metal having a limited thickness and is axially shaped, partly by retraction, in the bearing and fixing area for the brake lining, characterized in that the carrier plate (10, 10a) is provided with a single crease-like recess (20), which defines a planar surface located in the feed path of the dashpot piston and is subject to the action of the latter and which is provided with a bulge (21) directed towards the dashpot piston.

2. Carrier plate according to claim 1, characterized in that the crease-like recess (20) has an approximately circular cross-section.

3. Carrier plate according to claim 2, characterized in that the all-round wall portion (20a) of the transition area from the brake lining bearing-side carrier plate surface (17) to the retraction surface slopes slightly.

4. Carrier plate according to claims 1 to 3, characterized in that each of the two retaining clips (15, 16) formed on the carrier plate (10) and having the locking pin openings (15a, 16a) has a portion (15b, 16b) projecting out of the dashpot piston-loaded carrier plate surface (18) and bent in the upper edge area of the rectangular locking pin opening (15a, 16a).

5. Carrier plate according to claims 1 to 4, characterized in that vertical portions (12a 12b; 14a, 14b) formed from the brake lining bearing-side carrier plate surface (17) constructed in the vicinity of the lateral edges (12, 14) of carrier plate (10, 10a).

6. Carrier plate according to claims 1 to 5, characterized in that carrier plate (10, 10a) is made from a corrosion-resistant material.

## Revendications

1. Plaque de support (10) pour garnitures de frein pour freins à disques dont les garnitures de frein sont ténues à la zone d'avance des pistons des cylindres de frein moyennant des plaques de support aux goupilles de fixation qui relient la caisse de bride avec un cylindre de frein et la caisse de couvercle avec un cylindre de frein, plaque de support étant formée de façon rectangulaire consistant en un tôle d'une faible épaisseur et étant formée de façon axiale partiellement par contraction pour la garniture de frein à la zone de fixation et de contact, caractérisée en ce que la plaque de support (10, 10a) est munie d'une seule contracture (20) en forme de moulures qui défini une surface plane qui est disposée dans la voie d'avance du piston du cylindre de frein et qui peut être admise par ce dernier et qui est munie d'une courbure (21) dirigée vers le piston du cylindre de frein.

2. Plaque de support suivant la revendication 1, caractérisée en ce que la contraction en forme de moulures (20) a une section traversale à peu près circulaire.

3. Plaque de support suivant la revendication 2, caractérisée en ce que la section de la paroi entourant (20a) à la zone de transition de la surface de la plaque de support (17) dirigée vers le côté des garnitures de frein à la surface de contraction est formée de façon légèrement inclinée.

4. Plaque de support suivant les revendications 1 à 3, caractérisée en ce que chacune des deux colliers de fixation (15, 16) disposés à la plaque de support (10) avec les d'écoupures pour le goupilles de fixation (15a, 16a) présente une section (15b, 16b) débordant de la surface de la plaque de support (18) admissible par le piston du cylindre de frein et coudée à la zone supérieure du bord de la découpure rectangulaire pour les goupilles de fixation.

5. Plaque de support suivant les revendications 1 à 4, caractérisée en ce que à la zone des bords latéraux (12, 14) de la plaque de support (10, 10a) des sections verticales (12a, 12b; 14a, 14b) sont disposées sur la surface de la plaque de support (17) dirigée vers les garnitures de frein.

6. Plaque de support suivant les revendications 1 à 5, caractérisée en ce que la plaque de support (10, 10a) consiste en un matériau résistant à la corrosion.

FIG. 1

100

101

110

104

111

103

102

105a

105

0 083 681

FIG. 2

FIG. 4

FIG. 3

FIG. 5

FIG. 6

9

FIG. 7

IX

10 a

IX

FIG. 8

FIG. 9

10 a

10 a

FIG. 10

$\overline{XI}$

$\overline{XI}$

10 a

FIG. 11

10a

FIG.12

10 a

FIG.13

→ XIV

FI G.14

XVI

XVI

10a

→ XIV

FI G.15

10a

FIG.16

10a

FIG.17

10 a

FIG.18

10 a

FIG.19

XX

XXI

10 a

XXII

XXII

XX

XXI

FIG. 20

10 a

FIG. 21

10a

FIG. 22

10 a